# FASCICULE DE BREVET EUROPEEN

(11) **EP 1 080 045 B1**
(45) Date de publication et mention de la délivrance du brevet: **17.07.2002**
(21) Numéro de dépôt: 99916969.1
(22) Date de dépôt: 30.04.1999
(51) Int. Cl.: C02F 9/00, C02F 1/16

(54) **PROCEDE DE TRAITEMENT DE FLUIDE LIQUIDE COMPRENANT UNE FRACTION VOLATILE**
VERFAHREN ZUM BEHANDELN EINER FLÜSSIGKEIT, DIE FLÜCHTIGE BESTANDTEILE ENTHÄLT
METHOD FOR TREATING FLUID LIQUID CONTAINING A VOLATILE FRACTION

(30) Priorité: 30.04.1998 FR 9805506
(43) Date de publication de la demande: 07.03.2001
(73) Titulaire: SARP INDUSTRIES, 78520 Limay (FR)
(72) Inventeur: NOGRETTE, Jean-François, F-75012 Paris (FR); LEFEBVRE, Bernard, F-75011 Paris (FR); NOTELTEERS, Jean-Guy, F-75010 Paris (FR); LEGLISE, Jean-Paul, F-78360 Montesson (FR)
(74) Mandataire: Ballot, Paul
(86) Numéro de dépôt international: FR9901038
(87) Numéro de publication internationale: WO9957069

(56) Documents cités:
- EP-A- 0 563 482
- WO-A-93/25292
- US-A- 5 601 040
- PATENT ABSTRACTS OF JAPAN vol. 098, no. 006, 30 avril 1998 (1998-04-30) & JP 10 034133 A (HAMADA SEISAKUSHO:KK), 10 février 1998 (1998-02-10)

## Description

La présente invention se rapporte à un procédé de traitement d'au moins un fluide liquide, et à une installation destinée à la mise en oeuvre du procédé.

Les normes antipollution de plus en plus strictes, obligent de trier les déchets ménagers et industriels, selon des critères physico-chimiques très précis, avant de les mettre en décharge.

Actuellement l'une des méthodes les plus couramment utilisées pour mettre de côté des matières inutilisées est de les entasser dans une cavité. Ces matières, considérées comme des déchets, sont d'origine diverses. Elles peuvent provenir de milieux ménagers, industriels, agricoles, et comprendre une grande variété de produits minéraux et organiques.

Ces déchets peuvent présenter une toxicité et une stabilité différentes, vis à vis de l'environnement. En effet, certains d'entre eux, considérés comme toxiques pour l'environnement de par leur nature chimique, peuvent perturber gravement un écosystème naturel s'ils s'y infiltrent.

Aussi il est nécessaire d'éviter au maximum la pénétration de ces composants dans les structures du sol, et par conséquent il est impératif de les récupérer en vue de les traiter ultérieurement.

Lorsqu'ils sont entassés, voire comprimés, ces déchets se trouvent en milieu anaérobie. Ce milieu, dépourvu d'oxygène favorise, dans une première phase la formation d'acides organiques, puis dans une seconde phase la formation d'un gaz (biogaz). Simultanément, un liquide aqueux (lixiviat) est formé.

Ce biogaz constitué d'un mélange comprenant notamment du gaz carbonique, du méthane, de la vapeur d'eau, du sulphure d'hydrogène, des amines, des phosphines, possède une relativement faible valeur énergétique, qui reste malgré tout, intéressante à exploiter sur le plan industriel. Le biogaz présente en outre les inconvénients d'être corrosif et nauséabond. Ces différents inconvénients nécessitent, avant toute exploitation industrielle du potentiel énergétique du biogaz, de lui appliquer un prétraitement difficile à mettre en oeuvre du fait du coût élevé du transport du biogaz et de l'éloignement des décharges par rapport aux sites de traitement et par rapport aux utilisateurs potentiels.

Par ailleurs, le lixiviat est généralement récupéré par drainage à partir du fond des cavités dans lesquelles les déchets sont entassés. Des mesures renforcées pour protéger l'environnement, obligent de rendre les alvéoles imperméables aux infiltrations dans le sol. Cette imperméabilisation est réalisée par l'application d'argile et/ou d'un revêtement plastique sur la surface interne des alvéoles. Cette protection des alvéoles entraîne une augmentation des quantités de lixiviat récupérées par rapport au passé.

Le lixiviat comprend notamment en plus de l'eau, des composés toxiques pour l'environnement, à base de métaux lourds et/ou à base de sels solubles dans l'eau. Il est donc nécessaire de lui faire subir un traitement chimique préalable pour rendre inerte les polluants qu'ils comprend, avant son rejet dans la nature.

Le lixiviat est par ailleurs connu pour être corrosif, par exemple vis à vis du béton.

Dans la plupart des procédés utilisés jusqu'ici, les mauvaises performances, les coûts élevés pour la mise en oeuvre du traitement de ces déchets liquides et gazeux et les contraintes d'utilisation sont des inconvénients majeurs

En effet, l'utilisation de procédés biologiques classiques entraîne des rejets polluants dans le milieu naturel du fait du mauvais rendement dans le traitement des déchets.

Des procédés par oxydations chimiques nécessitent l'utilisation de réactifs complémentaires (eau oxygénée, ozone) dont le dosage doit être en permanence adapté à la nature variable des constituants chimiques présents dans le lixiviat.

L'incinération directe des lixiviats nécessite une installation supplémentaire de filtration de fumées pour capter les particules des sels séchés pendant l'incinération.

Enfin le document WO93/25292 décrit un procédé de traitement de lixiviat dans lequel le lixiviat est concentré dans un évaporateur dans lequel il est mis en contact direct avec des gaz de combustion et duquel on extrait un liquide sous forme vapeur. La fraction volatile de lixiviat est ensuite dirigée vers un échangeur de chaleur qui est destiné à chauffer le lixiviat à traiter, avant de l'éliminer dans l'atmosphère. La fraction concentrée du lixiviat est extraite de l'évaporateur, dont une partie insuffisamment traitée peut être recyclée dans l'évaporateur.

Aussi il subsiste le besoin de pouvoir traiter correctement, facilement, simultanément, économiquement donc localement, et sans polluer l'environnement ni la nature, un déchet de nature liquide avec un déchet de nature gazeuse, tous deux étant considérés comme polluant de part leur double aspect toxique et corrosif, ayant une forte teneur en eau, et ceci sans présenter les inconvénients précédents.

L'objet de l'invention consiste en un procédé de traitement d'au moins un fluide liquide non traité présentant une forte teneur en eau, et comprenant une fraction volatile et une fraction lourde en vue de séparer ces deux fractions.

Le procédé consiste à :
a) brûler au moins un fluide gazeux de façon à produire un gaz de combustion, à
b) récupérer la chaleur du gaz de combustion pour chauffer le fluide liquide, à l'aide d'une boucle de circulation d'un liquide comprenant un premier échangeur de chaleur gaz/liquide et un deuxième échangeur de chaleur liquide/liquide, à
c) faire circuler sous pression le fluide liquide réchauffé, à
d) extraire, par évaporation, la fraction volatile du fluide liquide, à
e) oxyder par combustion les composants de la fraction volatile, puis à
f) extraire la fraction lourde sous forme concentrée,
ledit procédé permettant de traiter simultanément au moins un fluide liquide et au moins un fluide gazeux.

L'objet de l'invention présente l'avantage d'éviter de rejeter des résidus dans l'environnement sous forme liquide, par l'utilisation de l'énergie présente en quantité importante dans le fluide gazeux. En effet, l'utilisation de cette énergie permet de vaporiser les rejets dans l'atmosphère.

L'objet de l'invention présente par ailleurs l'avantage de pouvoir traiter un déchet de nature liquide en utilisant un autre déchet de nature gazeuse sans ajout de réactif supplémentaire, tout en permettant de faire évaporer une fraction du volume initial du déchet liquide.

Par ailleurs, le procédé de l'invention permet d'oxyder par combustion les composés organiques présents dans la fraction volatile du déchet liquide sans la nécessité d'utiliser un carburant supplémentaire, avec la possibilité de récupérer, par condensation, tout ou partie de cette fraction volatile.

Enfin le procédé de traitement selon l'invention est particulièrement adapté aux variations de composition du fluide liquide entre différents sites d'extraction (décharges) et entre différents stades de prélèvement sur un même site ou sur des sites différents. Contrairement à un procédé de type biologique, pour obtenir une performance maximale, le procédé de l'invention est totalement insensible aux variations de la biodégradabilité du fluide liquide.

En outre, la compacité des équipements nécessaires à la mise en oeuvre du procédé, facilite le transport par camion des unités de traitement et par conséquent en diminue le coût de revient.

L'invention a encore pour objet une installation de traitement destinée à mettre en oeuvre le procédé précédent.

Cette installation se caractérise en ce qu'elle comprend essentiellement :
- une conduite d'arrivée d'au moins un fluide gazeux,
- une chambre de combustion,
- une boucle de récupération de chaleur comprenant un premier échangeur de chaleur gaz/liquide et un deuxième échangeur de chaleur liquide/liquide,
- un ventilateur destiné à évacuer, en régulant, dans l'atmosphère, les gaz de combustion qui proviennent de la chambre de combustion, et qui ont été refroidis après passage dans l'échangeur de chaleur,
- une conduite d'arrivée du fluide Liquide,
- un évaporateur destiné à vaporiser la fraction volatile du fluide liquide,
- un dispositif d'extraction de la fraction lourde.

Le fluide liquide circule de préférence avec le fluide partiellement débarrassé de sa fraction volatile.

La combustion du fluide gazeux s'effectue de préférence à une température supérieure à environ 900°C, et celle de la fraction volatile à une température supérieure à 500°C environ.

Lors du recyclage, le fluide liquide peut circuler de préférence sous pression, puis être chauffé à une température supérieure à la température d'évaporation de la fraction volatile du fluide liquide.

La récupération de chaleur se fait sur les gaz de combustion refroidis de préférence à une température inférieure à environ 700°C. Ils sont de préférence évacués dans l'atmosphère à une température d'environ 200°C.

La fraction lourde comprend notamment des matières organiques lourdes et des sels solubles dans l'eau. Elle représente entre environ 1 et 20% du volume initial du fluide liquide avant son traitement selon l'invention.

De préférence, le fluide utilisé dans le procédé selon l'invention est du biogaz. Ce biogaz peut comprendre au moins un composé combustible sous forme gazeuse (par exemple du méthane), et peut comprendre en plus de ce composé combustible, au moins un composé sous forme gazeuse choisi parmi l'eau, l'air, le gaz carbonique, des composés soufrés, des composés aminés, et leur mélange.

Le fluide liquide utilisé dans le procédé de l'invention est de préférence un lixiviat comprenant de l'eau et pouvant comprendre en plus au moins un composé choisi parmi des sels de sodium, des sels de potassium, des sels de calcium, des sels de magnésium, des sels de chlore, des sels de sulfates, des composés azotés, des sels d'ammoniaque, des sels de phosphore, des ions Fe++, des ions Mn++, des ions Zn++, du chrome, du plomb, le cuivre, du cadmium, du nickel, des pollutions organiques quantifiables par mesure de la Demande Chimique en Oxygène, des pollutions organiques quantifiables par mesure de la Demande Biologique en Oxygène, du carbone organique total, et leur mélange.

Le débit d'entrée du fluide liquide non traité est fonction du débit de sortie des gaz de combustion.

L'invention va maintenant être illustrée au moyen des figures annexées.
- la figure 1 représente une vue schématique des principaux éléments de l'installation qui permet de mettre en oeuvre le procédé,
- la figure 2 représente une vue schématique des principaux éléments d'une installation différente de celle revendiquée du fait qu'elle ne comprend qu'un seul échangeur de chaleur.

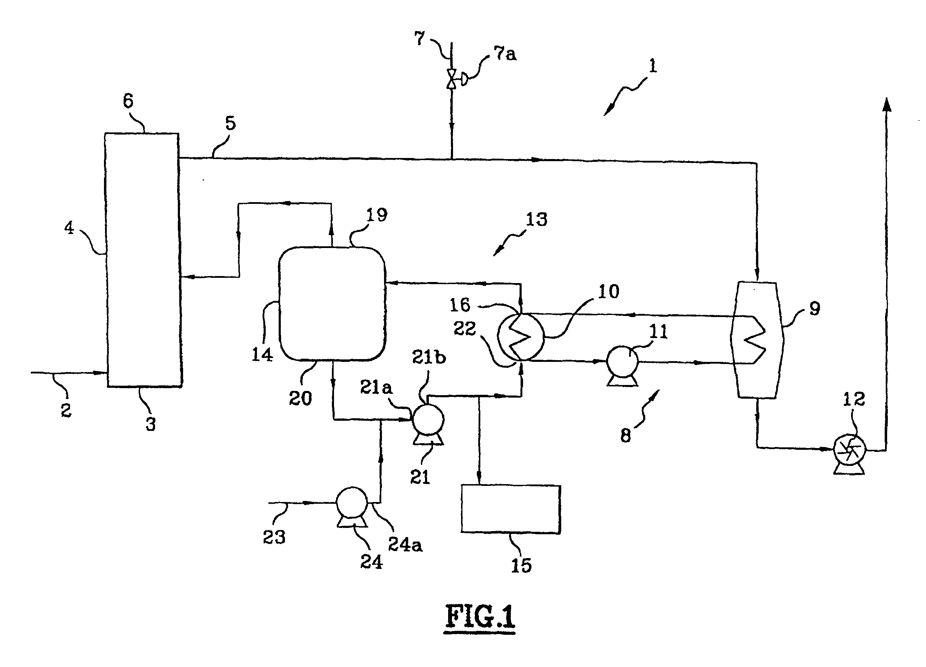

Sur la figure 1 l'installation est représentée par la référence générale 1. Cette installation comprend une conduite 2 d'arrivée de biogaz. Cette conduite 2 est connectée à la partie inférieure 3 d'une chambre de combustion 4. Une conduite 5 d'évacuation de gaz chauds est connectée à la partie supérieure 6 de la chambre de combustion 4. Un dispositif 7 d'introduction d'air atmosphérique est connecté à la conduite 5. Une vanne 7a de réglage permet de varier le débit d'entrée de l'air.

La chambre de combustion 4 peut être une torchère, un incinérateur ou tout autre moyen de combustion analogue. La chambre de combustion 4, sensiblement longiforme, comprend à l'une de ses extrémités un dispositif destiné à brûler des gaz combustibles. Les gaz de combustion s'échappent par l'autre extrémité.

La chambre de combustion 4 peut être disposée verticalement, horizontalement ou selon un angle « a » par rapport à un axe vertical lui permettant de fournir un rendement adapté au procédé de l'invention.

La conduite 5 est reliée à une boucle de référence générale 8 d'échange thermique. Cette boucle 8 est constituée d'un échangeur de chaleur 9 gaz/liquide, d'un échangeur liquide/liquide 10, et d'un pompe 11 de circulation.

L'échangeur de chaleur 9 est relié au moyen d'un ventilateur 12 à l'extérieur.

L'installation selon l'invention comprend de plus, essentiellement un circuit de référence générale 13.

Ce circuit 13 est constitué par l'échangeur de chaleur 10, un évaporateur 14 et un dispositif d'extraction 15 de la fraction lourde du lixiviat. L'évaporateur 14, comprenant une chambre d'évaporation (non représentée), est constitué en un matériau résistant à la corrosion, tel que l'acier ou l'acier allié. Le choix de la nature du matériau est fonction de la nature chimique du lixiviat à traiter.

La sortie 16 de l'échangeur de chaleur 10 est reliée au moyen de canalisations successives à l'évaporateur 14. La partie supérieure 19 de l'évaporateur 14 est reliée au moyen d'une canalisation à la chambre de combustion 4 à une distance de la flamme de combustion suffisante pour permettre une combustion correcte et simultanée de la fraction volatile du lixiviat et du biogaz.

La partie inférieure 20 de l'évaporateur 14 est reliée au moyen d'une conduite à l'entrée 21a d'une pompe 21. La fraction lourde comprenant encore des composés volatils, est récupérée puis recyclée. La sortie 21b de la pompe 21 est reliée au moyen d'une conduite à l'entrée 22 de l'échangeur de chaleur 10.

Une conduite d'arrivée 23 alimente l'installation de traitement en lixiviat à traiter au moyen d'une pompe 24 afin de garder une quantité totale en lixiviat à traiter constante. La sortie 24a de la pompe 24 est reliée au moyen d'une canalisation à l'entrée 21a de la pompe 21.

La température du lixiviat non traité, sous pression, va d'environ 10° à 30°C.

Le dispositif d'extraction 15 est relié au moyen d'une canalisation à la sortie 21b de la pompe 21.

Lors du fonctionnement de l'installation, la canalisation 2 alimente en biogaz la partie inférieure 3 de la chambre de combustion 4. Les gaz chauds, issus de la combustion et à une température supérieure à environ 900°C, sont évacués par la partie supérieure 6 de la chambre de combustion 4 vers l'échangeur de chaleur 9. La chaleur dégagée est transmise au lixiviat à traiter via la boucle d'échange thermique 8.

Les gaz chauds sortant de la chambre de combustion 4 sont partiellement refroidis à une température allant d'environ 700°C à 200°C par l'apport d'air provenant de l'atmosphère, avant d'entrer dans l'échangeur de chaleur 9 de façon à être compatibles avec le matériau constituant l'échangeur 9. A la sortie de l'échangeur, la température des gaz est d'environ 200°C. Cette température évite la formation d'un panache dû à la présence de vapeur d'eau.

La pompe 11 fait circuler une boucle de fluide liquide dont le rôle est de "tamponner" à une température inférieure à 175°C environ les éventuelles fluctuations de chaleur dues aux variations de la qualité du lixiviat. Ceci évite de provoquer la vaporisation du lixiviat à traiter au niveau des parois d'échange avec le risque d'encrassement des parois internes.

Le lixiviat à traiter, réchauffé au moyen de l'échangeur de chaleur 10, circule sous pression dans le circuit 13.

Ce lixiviat, réchauffé, s'évapore ensuite dans l'évaporateur 14.

La chaleur cédée permet de vaporiser la fraction volatile du lixiviat. La fraction volatile produite lors de l'évaporation sort ensuite en légère surpression par la partie supérieure 19 de l'évaporateur 14 pour être introduite dans la chambre de combustion 4 au-delà de la flamme de manière à ne pas affecter la qualité de combustion du biogaz.

Les composés volatiles entraînés avec la vapeur d'eau sont alors oxydés à une température supérieure à environ 500°C. Lors de cette oxydation, les molécules polluantes sont détruites par oxydation thermique. L'énergie dégagée lors de la combustion de ces gaz volatils est mélangée à celle issue de la combustion du biogaz pour ensuite être récupérée comme expliqué précédemment.

La fraction lourde du lixiviat non évaporée est un mélange principalement de matières organiques, de solides en suspension et de sels. Cette fraction se concentre dans la partie inférieure 20 de l'évaporateur 14, et est extraite séquentiellement de l'installation par le dispositif 15 pour subir ultérieurement un traitement spécifique. L'extraction est déterminée en fonction de la température du lixiviat présent au sein de l'évaporateur 14. En effet, la température est fonction de la concentration en fraction lourde. Les indications fournies par un suivi régulier de la température dans l'évaporateur 14, peuvent être complétées par des mesures régulières de la résistivité et de la viscosité du lixiviat.

La fraction lourde concentrée peut contenir jusqu'à 100g/l de sels dissous (essentiellement des chlorures de calcium et de sodium) et des matières organiques lourdes.

La pompe 21 permet de faire circuler et de mélanger la fraction lourde comportant encore des composés volatils avec le lixiviat non traité, l'ensemble étant sous pression.

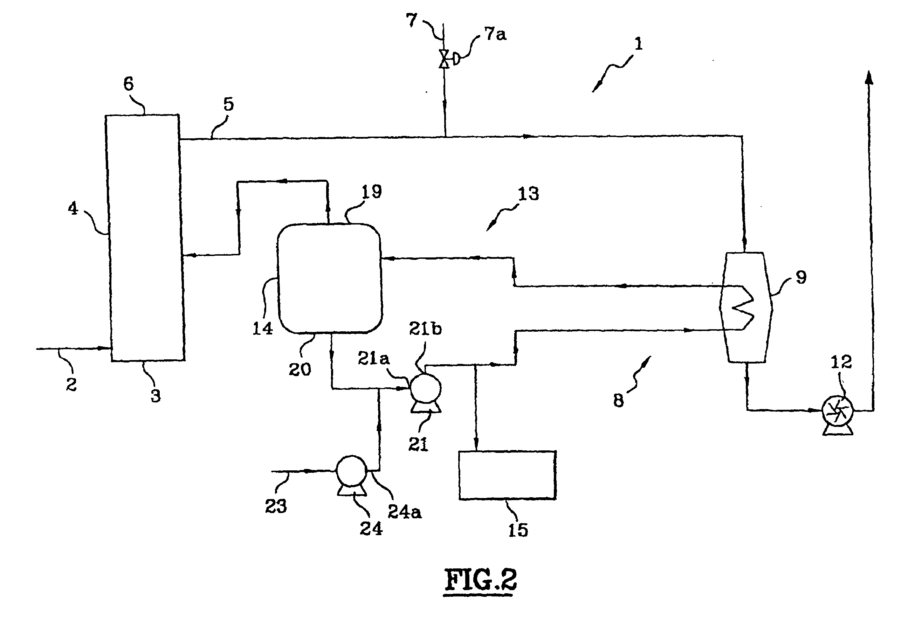

Comme on peut le voir sur la figure 2, la boucle d'échange thermique, de référence générale 8, ne comprend qu'un échangeur de chaleur 9 gaz/liquide.

Dans ce cas de figure, les températures d'entrée et de sortie des différents fluides (liquide, gaz) sont identiques à celles mentionnées sur la figure 1.

Le lixiviat est réchauffé en traversant l'échangeur de chaleur 9. La température des gaz de combustion à l'entrée de l'échangeur est comprise entre environ 700°C et 200°C.

## Revendications

1. Procédé de traitement d'au moins un fluide liquide non traité présentant une forte teneur en eau, et comprenant une fraction volatile et une fraction lourde en vue de séparer ces deux fractions, consistant à :
- brûler au moins un fluide gazeux de façon à produire un gaz de combustion, à
- récupérer la chaleur du gaz de combustion pour chauffer le fluide liquide, à l'aide d'une boucle de circulation d'un liquide comprenant un premier échangeur de chaleur gaz/liquide et d'un deuxième échangeur de chaleur liquide/liquide, à
- faire circuler sous pression le fluide liquide réchauffé, à
- extraire, par évaporation, la fraction volatile du fluide liquide, à
- faire circuler le fluide liquide non traité avec le fluide partiellement débarrassé de sa fraction volatile, à
- oxyder par combustion les composants de la fraction volatile, puis à
- extraire la fraction lourde sous forme concentrée, ledit procédé permettant de traiter simultanément au moins un fluide liquide et au moins un fluide gazeux.

2. Procédé selon la revendication 1, **caractérisé en ce que** la combustion du fluide gazeux s'effectue à une température supérieure à 900 °C environ.

3. Procédé selon la revendication 1, **caractérisé en ce que** la combustion de la fraction volatile du fluide liquide s'effectue à une température supérieure à environ 500°C.

4. Procédé selon la revendication 1, **caractérisé en ce que** le fluide liquide circule sous pression, puis est chauffé à une température supérieure à la température d'évaporation de la fraction volatile du fluide liquide.

5. Procédé selon la revendication 1, **caractérisé en ce que** la récupération de chaleur se fait sur les gaz de combustion refroidis à une température inférieure à environ 700°C et **en ce que** lesdits gaz de combustion sont évacués dans l'atmosphère à une température d'environ 200°C.

6. Procédé selon la revendication 1, **caractérisé en ce que** la fraction lourde, comprenant des sels solubles dans l'eau et des matières organiques lourdes, représente entre environ 1 et 20% du volume initial du fluide liquide avant traitement.

7. Procédé selon l'une des revendications 1 ou 2, **caractérisé en ce que** le fluide gazeux est du biogaz comprenant au moins un composé combustible sous forme gazeuse, associé ou non à au moins un autre composé sous forme gazeuse choisi parmi l'eau, le gaz carbonique, l'air, des composés soufrés, des composés aminés, et leur mélange.

8. Procédé selon la revendication 1, **caractérisé en ce que** le fluide liquide est un lixiviat comprenant de l'eau, et au moins un composé choisi parmi des sels de sodium, des sels de potassium, des sels de calcium, des sels de magnésium, des sels de chlore, des sels de phosphore, des ions Fe++, des ions Mn++, des ions Zn++, du chrome, du plomb, le cuivre, du cadmium, du nickel, des pollutions organiques quantifiables par mesure de la Demande Chimique en oxygène, des pollutions organiques quantifiables par mesure de la Demande Biologique en Oxygène, du carbone organique total, et leur mélange.

9. Procédé selon l'une des revendications 1, 2, 4 ou 8, **caractérise en ce que** le débit d'entrée du fluide liquide non traité est fonction du débit de sortie des gaz de combustion.

10. Installation destinée à la mise en oeuvre du procédé selon l'une des revendications précédentes **caractérisée en ce qu'**elle comprend essentiellement :
- une conduite (2) d'arrivée d'au moins une fluide gazeux,
- une chambre de combustion (4),
- une boucle (8) de récupération de chaleur comprenant un premier échangeur (9) de chaleur gaz/liquide, un deuxième échangeur de chaleur (10) liquide/liquide,
- un ventilateur (12) destiné à évacuer, en régulant, dans l'atmosphère, les gaz de combustion qui proviennent de la chambre de combustion (4), et qui ont été refroidis après passage dans l'échangeur de chaleur (9),
- une conduite (23) d'arrivée du fluide liquide,
- un évaporateur (14) destiné à vaporiser la fraction volatile du fluide liquide,
- un dispositif d'extraction (15) de la fraction lourde.

11. Installation selon la revendication 10, **caractérisée en ce qu'**elle comprend en outre au moins un dispositif (7) d'introduction d'air atmosphérique, muni d'au moins une vanne (7a) de réglage, destiné au refroidissement des gaz de combustion chauds provenant de la chambre de combustion (4), par dilution avec l'air atmosphérique.

12. Installation selon la revendication 10, **caractérisée en ce que** l'évaporateur (14) comprend :
a) une chambre d'évaporation constituée d'une partie supérieure (19) à partir de laquelle la fraction volatile est évacuée vers la chambre de combustion (4) en vue d'être brûlée, et d'une partie inférieure (20) à partir de laquelle la fraction lourde comprenant encore des composés volatils, est récupérée puis recyclée,
b) Une pompe (24) d'arrivée du fluide liquide, non traité, sous pression et à une température allant d'environ 10 à 30°C, afin de garder une quantité totale en fluide liquide à traiter, constante,
c) Une pompe (21) de circulation permettant de faire circuler et mélanger la fraction lourde comprenant encore des composés volatils avec le fluide liquide non traité.

## Patentansprüche

1. Verfahren zur Behandlung mindestens einer ungereinigten Flüssigkeit, die einen hohen Wassergehalt aufweist und eine flüchtige Fraktion und eine höhersiedende Fraktion enthält, zur Trennung der beiden Fraktionen, das darin besteht:
- zur Bildung eines Verbrennungsgases mindestens einen Gasstrom zu verbrennen,
- die Wärme aus dem Verbrennungsgas zu gewinnen, um die Flüssigkeit mit Hilfe eines Flüssigkeitskreislaufes zu erwärmen, der einen ersten Wärmetauscher Gas/Flüssigkeit und einen zweiten Wärmetauscher Flüssigkeit/Flüssigkeit umfaßt,
- die erwärmte Flüssigkeit unter Druck umlaufen zu lassen,
- aus der Flüssigkeit durch Verdampfen die flüchtige Fraktion zu entziehen,
- die ungereinigte Flüssigkeit mit der Flüssigkeit umlaufen zu lassen, aus der die flüchtige Fraktion zum Teil entfernt wurde,
- die Komponenten der flüchtigen Fraktion durch Verbrennung zu oxidieren, und schließlich
- die höhersiedende Fraktion in konzentrierter Form zu entnehmen, wobei das Verfahren es ermöglicht, mindestens eine Flüssigkeit und mindestens einen Gasstrom gleichzeitig zu behandeln.

2. Verfahren nach Anspruch 1, **dadurch gekennzeichnet, daß** die Verbrennung des Gasstroms bei einer Temperatur über etwa 900 °C durchgeführt wird.

3. Verfahren nach Anspruch 1, **dadurch gekennzeichnet, daß** die Verbrennung der flüchtigen Fraktion der Flüssigkeit bei einer Temperatur über etwas 500 °C durchgeführt wird.

4. Verfahren nach Anspruch 1, **dadurch gekennzeichnet, daß** die Flüssigkeit unter Druck umläuft und auf eine Temperatur über der Verdampfungstemperatur der flüchtigen Fraktion der Flüssigkeit erwärmt wird.

5. Verfahren nach Anspruch 1, **dadurch gekennzeichnet, daß** die Wärmegewinnung an den Verbrennungsgasen erfolgt, nachdem sie auf eine Temperatur unter etwa 700 °C abgekühlt wurden, und dadurch, daß die Verbrennungsgase mit einer Temperatur von etwa 200 °C in die Atmosphäre abgeführt werden.

6. Verfahren nach Anspruch 1, **dadurch gekennzeichnet, daß** die höhersiedende Fraktion, die in Wasser lösliche Salze und hochsiedende organische Substanzen enthält, etwa 1 bis 20 % des anfänglichen Volumens der Flüssigkeit vor der Behandlung ausmacht.

7. Verfahren nach einem der Ansprüche 1 oder 2, **dadurch gekennzeichnet, daß** es sich bei dem Gasstrom um Biogas handelt, das mindestens eine brennbare Verbindung in Gasform gegebenenfalls in Kombination mit mindestens einer weiteren Verbindung in Gasform enthält, die unter Wasser, Kohlendioxid, Luft, schwefelhaltigen Verbindungen, aminierten Verbindungen und deren Gemischen ausgewählt ist.

8. Verfahren nach Anspruch 1, **dadurch gekennzeichnet, daß** es sich bei der Flüssigkeit um Sickerwasser handelt, das Wasser und mindestens eine Verbindung enthält, die unter den Natriumsalzen, Kaliumsalzen, Calciumsalzen, Magnesiumsalzen, Chlorsalzen, Phosphorsalzen, Fe++-Ionen, Mn++-Ionen, Zn++-Ionen, Chrom, Blei, Kupfer, Cadmium, Nickel, organischen, durch Bestimmung des chemischen Sauerstoffverbrauchs quantifizierbaren Verunreinigungen, organischen, durch Messung des biologischen Sauerstoffverbrauchs quantifizierbaren Verunreinigungen, organisch gebundenem Kohlenstoff und deren Gemischen ausgewählt ist.

9. Verfahren nach einem der Ansprüche 1, 2, 4 oder 8, **dadurch gekennzeichnet, daß** der Durchsatz der ungereinigten Flüssigkeit am Einlaß von dem Durchsatz der Verbrennungsgase am Auslaß abhängt.

10. Vorrichtung zur Durchführung des Verfahrens nach einem der vorhergehenden Ansprüche, **dadurch gekennzeichnet, daß** sie im wesentlichen enthält:
- eine Zuleitung (2) für mindestens einen Gasstrom,
- ein Verbrennungskammer (4),
- einen Kreislauf (8) zur Wärmerückführung, der einen ersten Wärmetauscher gasförmig/flüssig (9) und einen zweiten Wärmetauscher flüssig/flüssig (10) umfaßt,
- ein Gebläse (12), das dazu dient, die Verbrennungsgase, die aus der Verbrennungskammer (4) stammen, nach dem Abkühlen in dem Wärmetauscher (9) geregelt in die Atmosphäre abzuleiten,
- eine Zuleitung (23) für die Flüssigkeit,
- einen Verdampfer (14), der dazu dient, die flüchtige Fraktion der Flüssigkeit zu verdampfen, und
- eine Vorrichtung (15) zur Entnahme der hochsiedenden Fraktion.

11. Vorrichtung nach Anspruch 10, **dadurch gekennzeichnet, daß** sie ferner mindestens eine Vorrichtung (7) zur Zufuhr von atmosphärischer Luft aufweist, die mit mindestens einem Regelventil (7a) ausgestattet ist und die dazu dient, die heißen Verbrennungsgase aus der Verbrennungskammer (4) durch Verdünnen mit atmosphärischer Luft abzukühlen.

12. Vorrichtung nach Anspruch 10, **dadurch gekennzeichnet, daß** der Verdampfer (14) umfaßt:
a) eine Verdampfungskammer, die aus einem oberen Bereich (19), aus dem die flüchtige Fraktion zur Verbrennung in die Verbrennungskammer (4) geleitet wird, und einem unteren Bereich (20) besteht, aus dem die höhersiedende Fraktion, die noch flüchtige Verbindungen enthält, gewonnen und rückgeführt wird,
b) eine Pumpe (24) zur Zufuhr der ungereinigten Flüssigkeit unter Druck bei einer Temperatur im Bereich von etwa 10 bis 30 °C, um die Gesamtmenge der zu behandelnden Flüssigkeit konstant zu halten, und
c) eine Pumpe (21) zur Zirkulation, mit der die höhersiedende Fraktion, die noch flüchtige Verbindungen enthält, umlaufen gelassen und mit der ungereinigten Flüssigkeit vermischt werden kann.

## Claims

1. Process for treatment of at least one untreated liquid fluid having a high water content, and comprising a volatile fraction and a heavy fraction, in order to separate these two fractions, consisting of:
- burning at least one gaseous fluid in order to produce a combustion gas, of
- recovering the heat of the combustion gas to heat the liquid fluid, by means of a loop for circulation of a liquid comprising a first gas/liquid heat exchanger and a second liquid/liquid heat exchanger, of
- circulating the heated liquid fluid under pressure, of
- extracting the volatile fraction of the liquid fluid, by evaporation, of
- circulating the untreated liquid fluid with the fluid having partially had its volatile fraction removed, of
- oxidising the components of the volatile fraction by combustion, and then of
- extracting the heavy fraction in concentrated form, the said process allowing the simultaneous treatment of at least one liquid fluid and at least one gaseous fluid.

2. Process as described in claim 1, **characterised by** the fact that the combustion of the gaseous fluid is carried out at a temperature greater than approximately 900°C.

3. Process as described in claim 1, **characterised by** the fact that the combustion of the volatile fraction of the liquid fluid is carried out at a temperature greater than approximately 500°C.

4. Process as described in claim 1, **characterised by** the fact that the liquid fluid circulates under pressure, and is then heated to a temperature greater than the evaporation temperature of the volatile fraction of the liquid fluid.

5. Process as described in claim 1, **characterised by** the fact that the recovery of heat is effected on the combustion gases cooled to a temperature less than approximately 700°C and by the fact that the said combustion gases are evacuated into the atmosphere at a temperature of approximately 200°C.

6. Process as described in claim 1, **characterised by** the fact that the heavy fraction, comprising water-soluble salts and heavy organic matter, represents between approximately 1 and 20% of the initial volume of the liquid fluid before treatment.

7. Process as described in one of claims 1 or 2, **characterised by** the fact that the gaseous fluid is biogas comprising at least one combustible compound in gaseous form, associated or not with at least one other compound in gaseous form selected from water, carbon dioxide gas, air, sulphured compounds, aminated compounds and their mixture.

8. Process as described in claim 1, **characterised by** the fact that the liquid fluid is a lixiviate comprising water, and at least one compound selected from sodium salts, potassium salts, calcium salts, magnesium salts, chlorine salts, phosphorous salts, Fe++ ions, Mn++ ions, Zn++ ions, chromium, lead, copper, cadmium, nickel, organic pollutants quantifiable by measurement of Chemical Oxygen Demand, organic pollutants quantifiable by measurement of Biological Oxygen Demand, total organic carbon, and their mixture.

9. Process as described in one of claims 1, 2, 4, or 8, **characterised by** the fact that the input flow rate of the untreated liquid fluid is a function of the output flow rate of the combustion gases.

10. Plant intended for implementation of the process as described in one of the preceding claims, **characterised by** the fact that it essentially comprises:
- a pipe (2) for supply of at least one gaseous fluid,
- a combustion chamber (4),
- a loop (8) for recovery of heat comprising a first gas/liquid heat exchanger (9) and a second heat liquid/liquid heat exchanger (10),
- a fan (12) intended to evacuate, with control, into the atmosphere, the combustion gases coming from the combustion chamber (4), and which have been cooled after passage in the heat exchanger (9),
- a pipe (23) for supplying the liquid fluid,
- an evaporator (14) intended to vaporise the volatile fraction of the liquid fluid,
- a device (15) for extraction of the heavy fraction.

11. Plant as described in claim 10, **characterised by** the fact that it also comprises at least one device (7) for introduction of atmospheric air, provided with at least one control valve (7a), intended to cool the hot combustion gases coming from the combustion chamber (4), by dilution with the atmospheric air.

12. Plant as described in claim 10, **characterised by** the fact that the evaporator (14) comprises:
a) an evaporation chamber formed of an upper part (19) from which the volatile fraction is evacuated to the combustion chamber (4) in order to be burned, and a lower part (20) from which the heavy fraction still including volatile compounds is recovered and then recycled,
b) a pump (24) for supply of the untreated liquid fluid, under pressure and at a temperature of between approximately 10 to 30°C, in order to retain a constant total quantity of liquid fluid to be treated,
c) a circulating pump (21) permitting circulation and mixing of the heavy fraction still including volatile compounds with the untreated liquid fluid.
